(19) Europäisches Patentamt
European Patent Office
Office européen des brevets

(11) **EP 3 670 563 A1**

(12) **EUROPÄISCHE PATENTANMELDUNG**

(43) Veröffentlichungstag:
**24.06.2020 Patentblatt 2020/26**

(51) Int Cl.:
***C08G 18/76*** *(2006.01)* ***C08G 18/09*** *(2006.01)*
***C08G 18/42*** *(2006.01)*

(21) Anmeldenummer: **18213800.8**

(22) Anmeldetag: **19.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Meyer-Ahrens, Sven**
  **51375 Leverkusen (DE)**
- **Schleiermacher, Stephan**
  **50259 Pulheim (DE)**
- **Welsch, Nicole**
  **51067 Köln (DE)**
- **Raffel, Bolko**
  **41542 Dormagen (DE)**
- **Arntz, Hans-Detlef**
  **51491 Overath (DE)**
- **Loevenich, Catherine**
  **51469 Bergisch Gladbach (DE)**

(74) Vertreter: **Levpat**
**c/o Covestro AG**
**Gebäude 4825**
**51365 Leverkusen (DE)**

(54) **PUR-PIR-HARTSCHAUMSTOFFE MIT VERBESSERTER BRANDBESTÄNDIGKEIT**

(57) Die vorliegende Erfindung betrifft Polyurethan/Polyisocyanurat-Hartschaumstoffe, die eine gegenüber den bekannten Hartschaumstoffen verbesserte Brandbeständigkeit und Dimensionsstabilität aufweisen.

EP 3 670 563 A1

## Beschreibung

Die vorliegende Erfindung betrifft Polyurethan/Polyisocyanurat-Hartschaumstoffe, die eine gegenüber den bekannten Hartschaumstoffen verbesserte Brandbeständigkeit aufweisen.

Polyurethan/Polyisocyanurat-Hartschaumstoffe und ihre Verwendung sind bekannt und vielfach in der Literatur beschrieben. Bevorzugt werden Polyurethan/Polyisocyanurat-Hartschaumstoffe auf Basis von sogenanntem technischen "Roh-MDI" (Diphenylmethandiisocyanat, welches noch Polyphenylpolymethylenpolyisocyanat und weitere durch die Herstellung bedingte Komponenten [beispielsweise Isocyanurate, Acridane etc.] enthält) eingesetzt. Wie bereits erwähnt unterliegen die technischen Isocyanate herstellungsbedingt gewissen Schwankungen in der Zusammensetzung hinsichtlich ihrer Isomeren- und Homologen-Verteilung. Zudem können unterschiedliche Mengen an Nebenprodukten aus der MDA-Synthese, wie Acridane und N-Methyl-MDA(N-Methyl-Diphenylmethandiamin) etc. vorliegen. Als pMDI (polymeres MDI) werden insbesondere solche Isocyanate bezeichnet, bei denen aus dem Roh-MDI die Diphenylmethandiisocyanate zum Teil abgetrennt wurden.

Zur Synthese von Roh-MDI wie auch pMDI liegen ebenfalls viele Veröffentlichungen vor.

Bei der Herstellung von polyisocyanurathaltigen Polyurethandämmplatten oder den die Dämmplatten enthaltenden Metall-Paneelen wird vorzugsweise pMDI mit großem Anteil an mehrkernigem Polymethylenpolyphenylpolyisocyanat im Viskositätsbereich von 170 - 1200mPas eingesetzt (gemäß DIN EN ISO 3219:1994).

Polyurethan-Polyisocyanurat-Hartschaumstoffe sind seit langem bekannt und vielfach beschrieben. Der Einsatz der Polyurethan- Hartschaumstoffe erfolgt vorwiegend zur Wärmeisolation, beispielsweise in Kältegeräten, Transportmitteln oder Gebäuden sowie zur Herstellung von Bauelementen, insbesondere Metall-Sandwich-Elementen, Dämmplatten und Zuschnitten aus Hartschaum-Blockware.

Ihre Herstellung erfolgt üblicherweise durch Umsetzung von Polyisocyanaten, wobei hier zumeist Diphenylmethandiisocyanat (MDI) und insbesondere Mischungen aus Diphenylmethandiisocyanat und den höheren Homologen Polyphenylenpolymethylenpolyisocyanaten eingesetzt werden, mit Verbindungen mit mindestens zwei mit Isocyanatgruppen reaktiven Wasserstoffatomen.

Eine wesentliche Anforderung an die Polyurethan- Hartschaumstoffe ist ihr Brandverhalten. Das Brandverhalten wird speziell bei Bauanwendungen z.B. nach der DIN 4102 Brandverhalten von Baustoffen und Bauteilen bestimmt. Für weitere Zulassungsprüfungen ist das Bestehen eines Kleinbrennertests mit einer maximalen Flammhöhe von 150 mm vorausgesetzt.

Um dies zu erreichen, werden die Polyurethane mit Flammschutzmitteln wie z.B Tris-(chlorisopropyl)phosphat oder Triethylphosphat ausgestattet.

Platten oder linerare Produkte aus Polyurethan/Polyisocyanurat-Hartschaumstoffen werden auf Stoß verlegt, um eine Gebäudehülle oder Bauelemente, wie z.B. Rohre, mit einer möglichst geschlossenen Dämmschicht zu versehen. Hierbei bewirkt ein deutlicher Schrumpf von Platten oder linearen Produkten aus Polyurethan/Polyisocyanurat-Hartschaumstoffen, dass Spalten zwischen den verlegten Platten entstehen. Sie schwächen die Wärmeisolation einer Gebäudehülle. Deshalb wird ein geringer Schrumpf von Dämmplatten, Metall-Sandwich-Elementen oder Blockschäumen angestrebt.

In US 3516950 wird ein Verfahren zur Herstellung von Polyurethanschäumen mit Polyisocyanuratstrukturen beschrieben. Es wird darauf hingewiesen, dass es manchmal vorteilhaft sein kann, Polyisocyanate mit niedrigen Gehalten an hydrolisierbarem Chlor (HC-Wert) für die Polyisocyanuratherstellung einzusetzen, so dass die eingesetzten Mengen an Katalysator minimiert werden können. Es ist unklar, wie hoch die Konzentration an hydrolisierbarem Chlor sein sollte. Auswirkungen auf Brand und Dimensionsstabilität des Schaumes werden nicht beschrieben.

Aufgabe war es daher, Polyurethan/Polyisocyanurat-Hartschaumstoffe zur Verfügung zu stellen, die gute intrinsische Brandeigenschaften aufweisen und dimensionsstabil sind.

Diese Aufgabe konnte überraschenderweise dadurch gelöst werden, dass als Isocyanatkomponente ein Gemisch aus Diphenylmethandiisocyanaten und Polyphenylenpolymethylenpolyisocyanaten mit einer speziellen Zusammensetzung und mit einem niedrigen Gehalt an hydrolysierbarem Chlor eingesetzt wird.

Gegenstand der Erfindung sind Polyurethan-Polyisocyanurat-Hartschaumstoffe mit einem Isocyanatindex größer 200 und kleiner 700, bevorzugt größer 240 und kleiner 450, erhältlich durch Umsetzung von

A) Polyisocyanaten mit

B1) Mischungen aus 50 bis 100 Gew.-% mindestens eines Polyesterpolyols und 0 bis 50 Gew.-% einer oder mehrerer Komponenten aus der Gruppe bestehend aus Polyetherpolyolen und Polyetheresterpol yolen

C) gegebenenfalls Kettenverlängerern und/oder Vernetzungsmitteln

in Gegenwart von

B2) Flammschutzmitteln,

B3) Treibkatalysatoren,

B4) PIR-Katalysatoren,

B5) Treibmitteln,

B6) Schaumstabilisatoren,

B7) gegebenenfalls Hilfs- und/oder Zusatzmitteln,

dadurch gekennzeichnet, dass als Polyisocyanat A) eine Mischung mit einer Viskosität (gemäß DIN EN ISO 3219:1994) von mehr als 300 MPas bei 25°C, bevorzugt mehr als 500 mPas bei 25°C, besonders bevorzugt mehr als 600 mPas bei 25°C und mit einem Gehalt an hydrolysierbarem Chlor von kleiner 1100 ppm nach 5 Stunden Hydrolyse (auch als "5h HC-Wert" bezeichnet), bevorzugt weniger als 1000 ppm nach 5 Stunden Hydrolyse, besonders bevorzugt weniger als 800 ppm nach 5 Stunden Hydrolyse enthaltend,

a1) 26-35 Gew.-% Diphenylmethandiisocyanat

a2) 21-28 Gew.-% Polyphenylenpolymethylenpolyisocyanat mit drei aromatischen Ringen,

a3) 6 -15 Gew.-% Polyphenylenpolymethylenpolyisocyanat mit vier aromatischen Ringen,

a4) 33-42 Gew.-% Polyphenylenpolymethylenpolyisocyanat mit fünf oder mehr aromatischen Ringen,

wobei sich die Gew.-% der Komponenten a1) bis a4) auf das Gesamtgewicht der Komponenten a1) bis a4) beziehen und sich zu 100 Gew.-% ergänzen, verwendet wird.

Bevorzugt wird als Polyisocyanat A) eine Mischung enthaltend

a1) 30 - 35 Gew.-% Diphenylmethandiisocyanat

a2) 21 - 28 Gew.-% Polyphenylenpolymethylenpolyisocyanat mit drei aromatischen Ringen,

a3) 8 - 13 Gew.-% Polyphenylenpolymethylenpolyisocyanat mit vier aromatischen Ringen,

a4) 34 - 41 Gew.-% Polyphenylenpolymethylenpolyisocyanat mit fünf oder mehr aromatischen Ringen,

wobei sich die Gew.-% der Komponenten a1) bis a4) auf das Gesamtgewicht der Komponenten a1) bis a4) beziehen und sich zu 100 Gew.-% ergänzen, eingesetzt.

Die Konzentrationen der MDI-Homologe im Polyisocyanat A) werden mittels HPLC-Chromatographie bestimmt.

Gegenstand der Erfindung ist weiterhin ein Verfahren zur Herstellung von Polyurethan-Polyisocyanurat-Hartschaumstoffen mit einem Isocyanatindex größer 200 und kleiner 700 durch Umsetzung von

A) Polyisocyanaten mit

B1) Mischungen aus 50 bis 100 Gew.-% mindestens eines Polyesterpolyols und 0 bis 50 Gew% einer oder mehrerer Komponenten aus der Gruppe bestehend aus Polyetherpolyolen und Polyetheresterpolyolen

C) gegebenenfalls Kettenverlängerern und/oder Vernetzungsmitteln,

in Gegenwart von

B2) Flammschutzmitteln

B3) Treibkatalysatoren

B4) PIR-Katalysatoren

B5) Treibmitteln

B6) Schaumstabilisatoren

B7) gegebenenfalls Hilfs- und Zusatzmitteln

dadurch gekennzeichnet, dass als Polyisocyanat A) eine Mischung mit einer Viskosität (gemäß DIN EN ISO 3219:1994) von mehr als 300 MPas bei 25°C, bevorzugt mehr als 500 mPas bei 25°C, besonders bevorzugt mehr als 600 mPas bei 25°C und mit einem Gehalt an hydrolysierbarem Chlor von kleiner 1100 ppm nach 5 Stunden Hydrolyse (5h HC-Wert), bevorzugt weniger als 1000 ppm nach 5 Stunden Hydrolyse, besonders bevorzugt weniger als 800 ppm nach 5 Stunden Hydrolyse, enthaltend

a1) 26-35 Gew.-% Diphenylmethandiisocyanat

a2) 21-28 Gew.-% Polyphenylenpolymethylenpolyisocyanat mit drei aromatischen Ringen,

a3) 6 -15 Gew.-% Polyphenylenpolymethylenpolyisocyanat mit vier aromatischen Ringen,

a4) 33-42 Gew.-% Polyphenylenpolymethylenpolyisocyanat mit fünf oder mehr aromatischen Ringen,

wobei sich die Gew.-% der Komponenten a1) bis a4) auf das Gesamtgewicht der Komponenten a1) bis a4) beziehen und sich zu 100 Gew.-% ergänzen, verwendet wird.

Das Verfahren wird vorzugsweise mit einer Mischung als Isocyanatkomponente enthaltend

a1) 30 - 35 Gew.-% Diphenylmethandiisocyanat

a2) 21 - 28 Gew.-% Polyphenylenpolymethylenpolyisocyanat mit drei aromatischen Ringen,

a3) 8 - 13 Gew.-% Polyphenylenpolymethylenpolyisocyanat mit vier aromatischen Ringen,

a4) 34 - 41 Gew.-% Polyphenylenpolymethylenpolyisocyanat mit fünf oder mehr aromatischen Ringen,

wobei sich die Gew.-% der Komponenten a1) bis a4) auf das Gesamtgewicht der Komponenten a1) bis a4) beziehen und sich zu 100 Gew.-% ergänzen, durchgeführt.

Erfindungsgemäß enthält die zur Herstellung der Polyurethan-Polyisocyanurat-Hartschaumstoffe eingesetzte Isocyanatkomponente A) weniger als 1100ppm nach 5 Stunden, bevorzugt weniger als 1000 ppm nach 5 Stunden, besonders bevorzugt weniger als 800 ppm nach 5 Stunden, jeweils bezogen auf das Gewicht der Komponente A), an hydrolysierbarem Chlor (5h HC-Wert).

Unter Verwendung einer solchen Isocyanatkomponente A) hergestellte Schaumstoffe weisen eine besonders niedrige Flammhöhe im Brandtest nach DIN 4102 und damit gute intrinsische Brandeigenschaften sowie eine hohe Dimensionsstabilität auf.

Vorzugsweise weist die Komponente A) einen Gehalt an freien NCO-Endgruppen (EN ISO 11909:2007) von 30 bis 33 Gew.-% auf.

Die Polyurethan-Polyisocyanurat-Hartschaumstoffe weisen vorzugsweise Rohdichten von kleiner 50 kg/m$^3$ gemäß ISO 845:2006 auf.

Unter der Isocyanat-Kennzahl (auch Kennzahl oder Isocyanat-Index oder Index genannt) wird dabei der Quotient aus der tatsächlich eingesetzten Stoffmenge [Mol] an Isocyanat-Gruppen und der für vollständigen Umsatz aller Isocyanat-reaktiven Gruppen stöchiometrisch benötigten Stoffmenge [Mol] an Isocyanat-Gruppen, multipliziert mit 100, verstanden. Da für die Umsetzung eines Mols einer Isocyanat-reaktiven Gruppe X ein Mol einer Isocyanat-Gruppe Y benötigt wird, gilt:

$$\text{Kennzahl} = (\text{Mole Y}) / (\text{Mole X}) \times 100$$

HC-Wert-Bestimmung

Etwa 10 g des MDI-Gemischs werden in einem 500 ml-Erlenmeyerkolben eingewogen und mit 40 ml Chlorbenzol versetzt. Anschließend werden 100 ml Propanol-(2) zugegeben, der ErlenmeyerKolben abgedeckt und das Reaktionsgemisch auf einem Magnetrührer 5 Minuten bei Raumtemperatur gerührt. Dann werden 100 ml Methanol zugegeben und das Gemisch wird weitere 5 Minuten bei Raumtemperatur gerührt. Anschließend werden 100 ml Wasser zugegeben, ein Rückflusskühler aufgesetzt und das Reaktionsgemisch 5 Stunden unter leichtem Rühren zum Sieden erhitzt. Nach Abkühlung werden 50 ml Aceton durch den Rückflusskühler zugegeben. Abschließend wird der Chlorid-Gehalt des Gemisches durch argentometrische Titration mit einer Silbernitrat-Maßlösung mit einer Stoffmengenkonzentration von ca. 0,002 mol/l unter potentiometrischer Endpunktanzeige titriert.

Die Herstellung des Polyisocyanats A) erfolgt nach den bekannten Verfahren, indem in einem ersten Schritt a) durch Kondensation von Anilin und Formaldehyd in Gegenwart eines sauren Katalysators ein Polyamingemisch erhalten wird (H. J. Twitchett, Chem. Soc. Rev. 3(2), 209 (1974); W. M. Moore in: Kirk-Othmer Encycl. Chem. Technol., 3rd. Ed., New York, 2, 338-348 (1978)). Geeignete Polyamingemische der Diphenylmethanreihe werden üblicherweise erhalten durch Kondensation von Anilin und Formaldehyd im Stoffmengenverhältnis 20 bis 1,6, bevorzugt 10 bis 1,8 sowie einem Stoffmengenverhältnis von Anilin und saurem Katalysator von 20 bis 1, bevorzugt 10 bis 2.

Formaldehyd wird technisch üblicherweise als wässrige Lösung eingesetzt. Hierbei kann der Wassergehalt von 1 bis 95% variieren. Bevorzugt wird eine wässrige Lösung mit 50 bis 80% Wasser eingesetzt. Es können jedoch auch andere methylengruppenliefernde Verbindungen wie z.B. Polyoxymethylenglykol, para-Formaldehyd oder Trioxan eingesetzt werden.

Als saure Katalysatoren haben sich starke organische und vorzugsweise anorganische Säuren bewährt. Geeignete Säuren sind beispielsweise Salzsäure, Schwefelsäure, Phosphorsäure, und Methansulfonsäure. Bevorzugt wird Salzsäure eingesetzt.

In einer bevorzugten Ausführungsform des Verfahrens wird Anilin und saurer Katalysator zunächst vermischt. Dieses Gemisch wird, ggf. nach Abfuhr von Wärme, in einem weiteren Schritt mit Formaldehyd bei Temperaturen zwischen 20°C und 100°C, bevorzugt bei 30°C bis 70°C in geeigneter Weise vermischt und anschließend in einem geeigneten Verweilzeitapparat einer Vorreaktion zu unterzogen. Die Vorreaktion erfolgt bei Temperaturen zwischen 20°C bis 100°C, vorzugsweise im Temperaturbereich 30°C bis 80°C. Im Anschluss an Vermischung und Vorreaktion wird die Temperatur des Reaktionsgemisches in Stufen oder kontinuierlich und ggf. unter Überdruck auf eine Temperatur von 100°C bis 250°C, bevorzugt auf 100°C bis 180°C, besonders bevorzugt auf eine Temperatur von 100°C bis 160°C gebracht.

Es ist jedoch ebenfalls möglich, in einer anderen Ausführungsform des Verfahrens Anilin und Formaldehyd zunächst in Abwesenheit des sauren Katalysators im Temperaturbereich von 5°C bis 130°C, bevorzugt von 40°C bis 100°C, besonders bevorzugt von 60°C bis 90°C, zu vermischen und zur Reaktion zu bringen. Hierbei bilden sich Kondensationsprodukte aus Anilin und Formaldehyd (sog. Aminal). Im Anschluss an die Aminalbildung kann im Reaktionsgemisch vorhandenes Wasser durch Phasentrennung oder andere geeignete Verfahrensschritte, beispielsweise durch Destillation, entfernt werden. Das Kondensationsprodukt wird dann in einem weiteren Verfahrensschritt mit dem sauren Katalysator in geeigneter Weise vermischt und in einem Verweilzeitapparat bei 20°C bis 100°C, bevorzugt 30°C bis 80°C einer Vorreaktion unterzogen. Anschließend wird die Temperatur des Reaktionsgemisches in Stufen oder kontinuierlich und ggf. unter Überdruck auf eine Temperatur von 100°C bis 250°C, bevorzugt auf 100°C bis 180°C, besonders bevorzugt auf eine Temperatur von 100°C bis 160°C gebracht.

Zur Aufarbeitung des sauren Reaktionsgemisches wird das Reaktionsgemisch nach dem Stand der Technik mit einer Base neutralisiert. Nach dem Stand der Technik erfolgt die Neutralisation üblicherweise bei Temperaturen von beispielsweise 90-100°C (H.J. Twitchett, Chem. Soc. Rev. 3(2), 223 (1974)). Als Basen sind beispielsweise geeignet die Hydroxide der Alkali- und Erdalkalielemente. Vorzugsweise kommt wässrige NaOH zur Anwendung.

Im Anschluss an die Neutralisation wird nach dem Stand der Technik die organische von der wässrigen Phase durch geeignete Verfahren (z.B. Phasentrennung in einer Scheideflasche) getrennt. Diese Trennung von organischer und wässriger Phase kann bei derselben Temperatur erfolgen, bei der die Neutralisation des sauren Umlagerungsgemisches erfolgte. Die nach Abtrennung der wässrigen Phase verbleibende produktenthaltende organische Phase wird nach dem Stand der Technik zur Abtrennung von Salzen und überschüssiger Base einer Wäsche unterzogen. Anschließend wird die gereinigte organische Phase von überschüssigem Anilin und anderen im Gemisch vorhandenen Stoffen (z.B. weiteren Lösungsmitteln) durch geeignete physikalische Trennverfahren wie z.B. Destillation, Extraktion oder Kristallisation befreit.

Das so erhaltene Polyamin der Diphenylmethanreihe (Roh-MDA) aus Schritt a) wird in einem zweiten Schritt b) nach den bekannten Methoden mit Phosgen in einem inerten organischen Lösungsmittel zu den entsprechenden Isocyanaten umgesetzt. Das Molverhältnis von Roh-MDA zu Phosgen wird zweckmäßigerweise so bemessen, dass pro Mol $NH_2$-Gruppe 1 bis 10 Mol, vorzugsweise 1,3 bis 4 Mol Phosgen in der Reaktionsmischung vorliegen. Als inerte Lösungsmittel haben sich chlorierte, aromatische Kohlenwasserstoffe wie z.B. Monochlorbenzol, Dichlorbenzole, Trichlorbenzole, die entsprechenden Toluole und Xylole sowie Chlorethylbenzol bewährt. Insbesondere Anwendung finden als inerte organische Lösungsmittel Monochlorbenzol, Dichlorbenzol oder Mischungen dieser Chlorbenzole. Die Menge an Lösungsmittel wird vorzugsweise so bemessen, dass die Reaktionsmischung einen Isocyanatgehalt von 2 bis 40 Gew.-%, vorzugsweise zwischen 5 und 20 Gew.-%, bezogen auf das Gesamtgewicht der Reaktionsmischung, aufweist.

Die Reaktion von Roh-MDA mit Phosgen wird hierbei bei Temperaturen von 50 bis 250°C und leichtem Unterdruck durchgeführt.

Nach beendeter Phosgenierung werden aus der Reaktionsmischung das überschüssige Phosgen, das inerte organische Lösungsmittel, die gebildete HCl oder Mischungen davon durch geeignete Verfahren (z.B. Destillation) abgetrennt. Hierzu wird der Druck schrittweise bis ins Vakuum reduziert und der verbliebene Phosgenüberschuss und die gebildete HCl verdampft und abgetrennt. Anschließend wird bevorzugt per Verdampfung das Lösungsmittel schrittweise reduziert unter weiterer Reduzierung des absoluten Drucks auf bis zu 1 mbar, bevorzugt auf bis zu 5 mbar. Parallel dazu wird die Temperatur erhöht bis das Lösungsmittel fast vollständig bis auf weit weniger als 0,1% entfernt ist. Letztlich enthält man in diesem Schritt b) ein rohes Di- und Polyisocyanat (rohes MDI-Gemisch). Dessen Polymeranteil wird durch destillative Abtrennung des Monomer-MDI soweit aufkonzentriert, dass sich das Produkt der o.g. Zusammensetzung ergibt.

In einer bevorzugten Ausführungsform der Erfindung enthalten die Mischungen aus Polyesterpolyolen mit einem Anteil von 50 Gew% bis 100 Gew% und Komponenten aus der Gruppe bestehend aus Polyetherpolyolen und Polyetheresterpolyolen mit einem Anteil von 50 Gew% bis 0 Gew% mindestens ein Polyesterpolyol, welches durch Kondensation von Carbonsäuren oder Mischungen von Carbonsäuren und organischen Hydroxylverbindungen oder Mischungen aus organischen Hydroxylverbindungen hergestellt wird, wobei die Mischungen jeweils zahlenmittlere Funktionalitäten zwischen 1,5 und 3, bevorzugt von 1,8 bis 2,4 aufweisen. Die Hydoxylzahl (OH-Zahl) des Polyesteralkohols liegt bevorzugt im Bereich von 160 - 350 mg KOH/g (ISO 14900:2017). Die eingesetzten Polyesterpolyole können vorzugsweise durch Kondensation von Alkoholen, bevorzugt Diolen mit 2 bis 12 Kohlenstoffatomen, besonders bevorzugt 2 bis 6 Kohlenstoffatomen, beispielsweise Ethylenglykol und Diethylenglykol mit Carbonsäuren, bevorzugt Dicarbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, besonders bevorzugt Phthalsäure, Isophthalsäure, Terephthalsäure und den isomeren Naphthalindicarbonsäuren, hergestellt werden.

Die Mischungen B1) aus mindestens einem Polyesterpolyol und gegebenenfalls Komponenten aus der Gruppe bestehend aus Polyetherpolyolen und Polyetheresterpolyolen können bevorzugt Polyetheresterpolyole mit OH-Zahlen von 160 bis 500 mgKOH/g, besonders bevorzug 280 bis 450 mgKOH/g enthalten.

Weiterhin können die Mischungen B1) bevorzugt zusätzlich zu den Polyesterpolyolen auch Polyetherpolyole und/oder Polyetheresterpolyole enthalten, besonders bevorzugt mindestens ein Polyetherpolyol , welches durch Anlagerung von Alkylenoxiden an niedermolekulare Polyhydroxyverbindungen hergestellt wird. Die Hydoxylzahl dieses Polyetherpolyols liegt vorzugsweise im Bereich von 20 - 1100 mg KOH/g (ISO 14900:2017).

Die in der Mischung B1) bevorzugt verwendeten Polyetherpolyole haben vorzugsweise eine Funktionalität zwischen 2 und 8, besonders bevorzugt von 2 bis 4. Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, Aminen und/oder DMC (Doppel-Metall-Cyanid) - Katalysatoren, hergestellt werden, zum Einsatz.

Als Alkylenoxide werden bevorzugt Ethylenoxid und/oder Propylenoxid eingesetzt. Als Startermoleküle kommen insbesondere Verbindungen mit mindestens 2 bis 8 Hydroxylgruppen oder mit mindestens zwei primären Aminogruppen im Molekül zum Einsatz.

Als Startermoleküle mit mindestens 2 bis 8 Hydroxylgruppen im Molekül werden vorzugsweise Diethylenglykol, Dipropylenglykol, Ethylenglykol, Butendiol, Propylenglykol, Trimethylolpropan, Glycerin, Pentaerythrit, Zuckerverbindungen, wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startermoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diaminodiphenylmethan sowie aliphatische Di- und Polyamine, wie Ethylendiamin, eingesetzt.

Die Polyetherpolyole besitzen eine zahlenmittlere Funktionalität von vorzugsweise 2 bis 8 und Hydroxylzahlen (ISO 14900:2017) von vorzugsweise 20 mgKOH/g bis 1100 mgKOH/g und besonders bevorzugt 28 mgKOH/g bis 112 mgKOH/g.

Zusätzlich zu den Mischungen B1) können auch sogenannte Kettenverlängerer und/oder Vernetzer C) verwendet werden. Beispielsweise kann zur Modifizierung der mechanischen Eigenschaften der Zusatz von difunktionellen Kettenverlängerungsmitteln, tri- und höherfunktionellen Vernetzungsmitteln oder gegebenenfalls Gemischen davon in bestimmten Anwendungen vorteilhaft sein. Als Kettenverlängerungs- und/oder Vernetzungsmittel werden vorzugsweise Alkanolamine und insbesondere Diole und/oder Triole mit Molekulargewichten kleiner als 400 g/mol, vorzugsweise 60 bis 300 g/mol verwendet. Kettenverlängerungsmittel, Vernetzungsmittel oder Mischungen davon werden, soweit vorhanden, in einer bevorzugten Menge von 0,1 bis 10 Gew.-%, bezogen auf die Summe der Komponenten B1) bis B7) und C) eingesetzt.

Als Flammschutzmittel B2) können im Allgemeinen die aus dem Stand der Technik bekannten Flammschutzmittel verwendet werden. Geeignete Flammschutzmittel sind beispielsweise bromierte Ether (z.B. Ixol® B251), bromierte Alkohole wie Dibromneopentylakohol, Tribromneopentylalkohol und PHT-4-Diol. Weiterhin können anorganische Flammschutzmittel verwendet werden, wie zum Beispiel roter Phosphor, roten Phosphor enthaltende Zubereitungen, Aluminiumoxidhydrat, Blähgraphit, Antimontrioxid und Ammoniumpolyphosphat (APP).

Besonders geeignet sind chlorierte Phosphate wie zum Beispiel Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat und chlorfreie Phosphate wie zum Beispiel Triethylphosphat (TEP), Dimethylpropylphosphonat (DMPP), Triphenylphosphat (TPP), Diphenylkresylphosphat (DPK), Bisphenol-A-bis(diphenylphosphat) (BDP), 1,3-Phenylenbis(diphenylphosphat) (RDP) und Hydroxymethyldiethylphosphonat.

Es können auch Mischungen aus mindestens zwei Flammschutzmitteln, wie z.B. ein Gemisch aus APP und TEP oder ein Gemisch aus TEP und TPP verwendet werden.

Die Flammschutzmittel B2) werden bevorzugt in einer Menge von 0 bis 30 Gew.-%, besonders bevorzugt von 0,3 bis 25 Gew.-%, insbesondere von 0,5 bis 10 Gew.-% bezogen auf das Gesamtgewicht aller Komponenten verwendet.

Als Katalysatoren B3) werden insbesondere Verbindungen eingesetzt, welche die Reaktion der Isocyanatgruppen mit den mit Isocyanatgruppen reaktiven Gruppen stark beschleunigen. Solche Katalysatoren sind stark basische Amine. Dazu gehören tertiäre aliphatische Amine, wie zum Beispiel bis(2-Dimethylaminoethyl)ether, N,N-Dimethylcyclohexylamin, N,N,N',N',N"-Pentamethyldiethylenetriamin, Dimethylbenzylamin und N,N-Dimethylaminopropylamin sowie Imidazole, Amidine und Alkanolamine.

Als Katalysatoren B4) zur Synthese Polyisocyanurat-haltiger Hartschaumstoffe werden Isocyanurat-Katalysatoren verwendet. Es handelt sich bevorzugt um Metallcarboxylate, insbesondere werden Kaliumformiat, Kaliumacetat, Kaliumpropionat und Kaliumoctoat sowie deren Lösungen, eingesetzt.

Als Treibmittel B5) kann Wasser verwendet werden, das mit Isocyanatgruppen unter Abspaltung von Kohlendioxid reagiert. Es kann auch Ameisensäure verwendet werden. Letzteres reagiert mit Isocyanat unter Bildung von Kohlendioxid und Kohlenmonoxid. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, wie beispielsweise Kohlendioxid, niedrigsiedende Alkane und Fluoralkane oder Fluoralkene. Als physikalische Treibmittel werden vorzugsweise Alkane und/oder Cycloalkane mit mindestens 4 Kohlenstoffatomen, Dialkylether, Ester, Ketone, Acetale, Fluoralkane oder Fluoralkene mit 1 bis 8 Kohlenstoffatomen und Tetraalkylsilane mit 1 bis 3 Kohlenstoffatomen in der Alkylkette, insbesondere Tetramethylsilan verwendet. Als Beispiele seien genannt Propan, n-Butan, iso- und Cyclobutan , n-, iso- und Cyclopentan, Cyclohexan, Dimethylether, Dimethoxymethan, Methylethylether, Methylbutylether, Ameisensäuremethylester, Aceton. Des Weiteren seien genannt Fluoralkene, wie trans-1-chloro-3,3,3-trifluoropropen, cis-1,1,1,4,4,4-Hexafluoro-2-buten und trans-1,1,1,4,4,4-Hexafluoro-2-buten und Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan, oder nur in geringen Mengen zugesetzt werden, wie 1,1,1,2,3,4,5,5,5 (oder1,1,1,3,4,4,5,5,5)-nonafluoro-4 (oder 2)-(trifluoromethyl)pent-2-en. Besonders bevorzugt eingesetzt werden Cyclopentan, Isopentan und/oder n-Pentan. Die genannten physikalischen Treibmittel können allein oder in beliebigen Kombinationen untereinander eingesetzt werden.

Als Schaumstabilisatoren B6) werden vor allem Polyethersiloxane eingesetzt. Diese Verbindungen sind im Allgemeinen so aufgebaut, dass ein Copolymerisat aus Ethylenoxid und Propylenoxid mit einem Polydimethylsiloxanrest verbunden ist. Solche Substanzen sind beispielsweise unter der Bezeichnung Struksilon 8031 der Fa. Schill und Seilacher am Markt erhältlich. Auch silikonfreie Stabilisatoren, wie beispielsweise das Produkt LK 443 von Evonik, können eingesetzt werden.

Als Hilfs- und Zusatzmittel B7) können zum Beispiel Reaktionsverzögerer, Fließmittel oder Farbstoffe eingesetzt werden.

Üblicherweise werden die erfindungsgemäßen Polyurethan-Polyisocyanurat-Hartschaumstoffe nach dem Zweikomponenten-Verfahren hergestellt. Bei diesem Verfahren werden die Mischungen B1) und gegebenenfalls C) mit Flammschutzmitteln B2), Treibmitteln B5), Katalysatoren B3) und B4), Schaumstabilisatoren B6) sowie gegebenenfalls weiteren Hilfs- und/oder Zusatzstoffen B7) zur sogenannten Polyolkomponente vermischt und diese mit den Polyisocyanaten A) oder Mischungen aus den Polyisocyanaten A) und gegebenenfalls Flammschutzmitteln B2) und Treibmitteln B5), auch als Isocyanatkomponente bezeichnet, zur Umsetzung gebracht.

Zur Herstellung der Polyurethan-Polyisocyanurat-Hartschaumstoffe werden die Polyisocyanate A) und die Polyolkomponente B1) und gegebenenfalls C) bevorzugt in solchen Mengen zur Umsetzung gebracht, dass der Isocyanatindex in einem Bereich zwischen 200 und 700, besonders bevorzugt zwischen 240 und 450 liegt.

Die Polyurethan-Polyisocyanurat-Hartschaumstoffe können diskontinuierlich oder kontinuierlich mit Hilfe bekannter Mischvorrichtungen hergestellt werden.

Die Ausgangskomponenten werden vorzugsweise bei einer Temperatur von 15 bis 35°C, vorzugsweise von 20 bis 30°C gemischt.

Das Reaktionsgemisch kann mit Hoch- oder Niederdruckdosiermaschinen in geschlossene Stützwerkzeuge gegossen werden. So können z.B. diskontinuierlich Sandwichelemente produziert werden. Alternativ kann das Reaktionsgemisch kontinuierlich auf eine bewegte Deckschicht aufgetragen werden, um anschließend als Block auszuhärten. Das Reaktionsgemisch auf der Deckschicht kann auch zusammen mit einer zweiten Deckschicht in einem Doppelband aushärten und nach dessen Verlassen je nach Deckschicht als Dämmplatte oder Metallpanel-Element mit einer Säge passend zugeschnitten zu werden.

Bei dem kontinuierlichen Verfahren auf einer Doppelbandanlage strömt das Reaktionsgemisch aus einem Mischkopf auf eine in ein Doppelband einlaufende untere Deckschicht aus einem flexiblen Material, schäumt auf und verklebt innerhalb der Druckzone der Anlage mit einer von oben zugeführten Deckschicht, vorzugsweise aus demselben Material. Es dient der Fertigung von PUR/PIR-Hartschaum-Dämmplatten mit flexiblen Deckschichten. Die Bandschaumplatten werden kontinuierlich gefertigt. Sie sind nach dem Durchlauf durch die Doppelbandanlage soweit ausgehärtet, dass sie in die gewünschten Abmessungen zugeschnitten werden können. Die Platten sind in unterschiedlichen Dicken bis zu 250 mm herstellbar.

Die kontinuierliche Herstellung von Polyurethan-Sandwichelementen erfolgt ebenfalls auf Doppelbandanlagen. Dabei wird das Reaktionsgemisch auf ein in das Doppelband einlaufendes Stahl- oder Aluminiumblech aufgetragen. Zur Erhöhung der Steifigkeit werden die metallischen Deckschichten meistens vor der Schäumung profiliert. Die aufschäumende Masse verklebt innerhalb der Bandanlage mit einem von oben zugeführten Stahl- oder Aluminiumblech. Nach dem Durchlauf durch die Bandanlage werden die Sandwichelemente in die gewünschten Lieferlängen zugeschnitten. Die Längskanten der Sandwichelemente sind in der Regel als Nut und Feder ausgebildet, um eine einfache und schnelle Montage der Fertigelemente zu ermöglichen. Häufig sind diese Elemente bereits werksseitig mit Dichtungen versehen, was bei der Verwendung zu einem hohen Maß an Luftdichtheit führt.

Besonders bevorzugt kann das Reaktionsgemisch zur kontinuierlichen Herstellung von Blockschaum auf eine U-förmig gefaltete, seitlich abgestützte Papierbahn aufgebracht werden, die durch ein Transportband weiterbewegt wird. Am Ende des Transportbandes wird der aufgeschäumte Block in der jeweils gewünschten Länge abgeschnitten und daraus nach einer Lagerphase Formkörper ausgeschnitten.

Die erfindungsgemäßen Hartschäume werden zur Herstellung von Dämmplatten und Metall-Sandwich-Elementen eingesetzt oder als diskontinuierlich oder kontinuierlich hergestellte harte Blockschäume verwendet.

Die Erfindung soll anhand der nachfolgenden Beispiele näher erläutert werden.

**Beispielteil:**

Eingesetzte Ausgangsmaterialien:

Polyol 1: Polyesterpolyol erhältlich aus einem Phthalsäure- /Adipinsäuregemisch (Masseverhältnis 4:1) und einem Diethylen-Ethylenglykol-Gemisch (Masseverhältnis 4:1) mit einer OH-Zahl von 240 g KOH/mg (gemessen nach ISO 14900:2017)

Polyol 2: 1,2-Propylenglykol gestartetes Propylenoxid-Polyetherpolyol mit einer OH-Zahl von 260 g KOH/mg (gemessen nach ISO 14900:2017)

Polyol 3: 1,2-Propylenglykol gestartetes Propylenoxid-Polyetherpolyol mit einer OH-Zahl von 28 g KOH/mg (gemessen nach ISO 14900:2017)

Polyol 4: Ethylenglykol gestartetes Ethylenoxid-Polyetherpolyol mit einer OH-Zahl von 400 g KOH/mg (gemessen nach ISO 14900:2017)

Polyol 5: 1,2-Propylenglykol gestartetes Polyetherpolyol auf Basis von Propylenoxid und Ethylenoxid, mit ca. 90 mol-% primären Hydroxylendgruppen und einer OH-Zahl von 28 g KOH/mg (gemessen nach ISO 14900:2017)

Flammschutzmittel 1: Levagard PP von LanXess AG
Kettenverlängerer 1: Diethylenglykol
Hilfsmittel 1: Polyester als Reaktionsverzögerer erhältlich aus Phathalsäureanhydrid und Diethylenglykol mit einer Säure-Zahl von 97 g KOH/mg (gemäß EN ISO 2114)

Katalysator 1: JEFFCAT DMCHA von Huntsman Corp.

Katalysator 2: Desmorapid 1118 von Covestro Deutschland AG

Schaumstabilisator 1: Dabco LK443 von Evonik AG
Treibmittel: Mischung aus 30 Gew% c-Pentan und 70 Gew% i-Pentan

Polyisocyanat 1:

a1) 27,32 Gew.-% Diphenylmethandiisocyanat

a2)25,46 Gew.-% pMDI mit drei aromatischen Ringen,

a3) 13,07 Gew.-% pMDI mit vier aromatischen Ringen,

a4) 30,18 Gew.-% pMDI mit fünf oder mehr aromatischen Ringen NCO-Gehalt: 30,93

Viskosität (bei 25°C) (gemäß DIN EN ISO 3219:1994)811 MPas HC-Wert nach 5 Stunden: 1502 ppm

Polyisocyanat 2:

a1) 24,4 Gew.-% Diphenylmethandiisocyanat

a2) 24,5 Gew.-% pMDI mit drei aromatischen Ringen,

a3) 12,2 Gew.-% pMDI mit vier aromatischen Ringen,

a4) 37,4 Gew.-% pMDI mit fünf oder mehr aromatischen Ringen NCO-Gehalt: 30,74

Viskosität (bei 25°C) (gemäß DIN EN ISO 3219:1994)781 MPas HC-Wert nach 5 Stunden: 666 ppm

Die Konzentrationen der MDI-Homologen im Polyisocyanat A) wurden mittels HPLC-Chromatographie bestimmt. Hierzu wurde das Polyisocyanat A) in einem Gemisch aus Methanol und THF im Massenverhältnis 1 zu 2 gelöst und derivatisiert. Die Mischung des Eluenten wurde über die Dauer des Chromatographieprozesses kontinuierlich verändert. Begonnen wurde mit einer Eluentmischung aus 62 Gew.-%Wasser und 38 Gew.-% Methanol und beendet mit 100% Methanol. Es wurde eine "reversed phase"-Kolonne eingesetzt (XTerra MSC18). Die Bestimmung erfolgte mit einem UVVIS- Dioden-Array-Detektor (DAD).

Die Menge des hydrolysierbaren Chlors im Polyisocyanat wurde wie folgt bestimmt:
HC-Wert-Bestimmung:

Etwa 10 g des MDI-Gemischs werden in einem 500 ml-Erlenmeyerkolben eingewogen und mit 40 ml Chlorbenzol versetzt. Anschließend werden 100 ml Propanol-(2) zugegeben, der ErlenmeyerKolben abgedeckt und das Reaktionsgemisch auf einem Magnetrührer 5 Minuten bei Raumtemperatur gerührt. Dann werden 100 ml Methanol zugegeben und das Gemisch wird weitere 5 Minuten bei Raumtemperatur gerührt. Anschließend werden 100 ml Wasser zugegeben, ein Rückflusskühler aufgesetzt und das Reaktionsgemisch 5 Stunden unter leichtem Rühren zum Sieden erhitzt. Nach Abkühlung werden 50 ml Aceton durch den Rückflusskühler zugegeben. Abschließend wird der Chlorid-Gehalt des Gemisches durch argentometrische Titration mit einer Silbernitrat-Maßlösung mit einer Stoffmengenkonzentration von ca. 0,002 mol/l unter potentiometrischer Endpunktanzeige titriert.

Die Polyisocyanate 1 bzw. 2 wurden entsprechend den in der Tabelle 1 angegebenen Daten mit den Mischungen B1) und gegebenenfalls C) in Gegenwart von B2) bis B7) umgesetzt. Die Herstellung der Schäume erfolgte bei den in der Tabelle 1 genannten Isocyanatindices mit einer Mischzeit von 10 sec mit einem Pendraulikrührer bei 2000 U/min. Die Komponenten wurden hierzu zuvor auf 23°C temperiert. Die Reaktionsmischung wurde in eine offene Form ausgetragen und ihre Reaktivität durch die angegebenen Zeiten charakterisiert. Auf Basis der vorbezeichneten Polyisocyanate wurden PUR/PIR-Hartschaumstoffe hergestellt. Dazu wurden den Mischungen B1) und gegebenenfalls C) Flammschutzmittel, Schaumstabilisator, Katalysatoren, Wasser und Gemisch von cyclo/iso-Pentan (30/70) als Treibmittel zugesetzt, die so erhaltene Mischung mit Polyisocyanat vermischt und das Gemisch in einen Pappkarton (26,5 x 26,5 x 26,5 $cm^3$) gegossen und darin ausreagiert. Die Prüfkörper zur Messung des Brandverhaltens gemäß EN 11925 und der Dimensionsänderungen wurden aus der Mitte eines jeden Schaumes entnommen. Die Rezepturen und Ergebnisse der physikalischen Messungen an den erhaltenen Proben sind in der Tabelle 1 wiedergegeben.

Die Rohdichte wurde ermittelt, indem aus der Schaummitte des Schaumes ein Würfel der Kantenlänge 9 cm entnommen wurde. Das genaue Maß der Würfel-Dimensionen wurde mit einem Messschieber ermittelt. Das Gewicht des Würfels wurde mit einer Waage bestimmt. Aus Gewicht und Volumen wurde die Dichte berechnet.

Zur Dimensionsmessung wurden aus dem Kern des hergestellten Schaumes zwei Würfel mit 9 cm Kantenlänge geschnitten. Die Würfeldimensionen wurden mit einem Messschieber ermittelt. Hierzu wurde der Abstand zweier Kantenmitten in allen drei Raumrichtungen des Würfels bestimmt. Die Steigrichtung des Schaumes wurde als Richtung D bezeichnet. Die anderen beiden Richtungen quer zur Steigrichtung des Schaumes wurden als L1 und L2 bezeichnet. Die Messpunkte vor der Temperaturlagerung wurden markiert und die Abstandsmessungen an diesen Punkten durchgeführt. Ein Schaumwürfel wurde bei 100°C für 24 Stunden im Ofen gelagert, entnommen, bei Raumtemperatur für 30 Minuten rekonditioniert und dann an den markierten Messpunkten erneut vermessen. Der andere Schaumwürfel wurde bei -22°C für 24 Stunden in einer Kühltruhe gelagert, entnommen, bei Raumtemperatur für 30 min rekonditioniert und dann erneut vermessen. Die prozentuale Dimensionsänderung der Abstandsmessungen vor und nach Temperaturlagerung wurden abhängig von der gemessenen Dimension als D%, L1% und L2% bei Temperaturen von 100°C bzw. -22°C bezeichnet.

Tabelle 1:

| | | Vergleich | Vergleich | erfindungsgemäß | Vergleich | Vergleich |
|---|---|---|---|---|---|---|
| | | Beispiel 1 | Beispiel 2 | Beispiel 3 | Beispiel 4 | Beispiel 5 |
| | | | | | | |
| Polyol 1: | [Gew.-Teile] | 33,8 | | 33,8 | | |
| Polyol 2: | [Gew.-Teile] | | 30,9 | | 30,9 | |
| Polyol 3: | [Gew.-Teile] | | 2,9 | | 2,9 | |
| Polyol 4: | [Gew.-Teile] | | | | | 28,4 |
| Polyol 5: | [Gew.-Teile] | | | | | 5,4 |
| Flammschutzmittel | [Gew.-Teile] | 17 | 17 | 17 | 17 | 17 |
| Diethylenglykol | [Gew.-Teile] | 0,9 | 0,9 | 0,9 | 0,9 | 0,9 |
| Hilfsmittel 1 | [Gew.-Teile] | 0,9 | 0,9 | 0,9 | 0,9 | 0,9 |
| Wasser | [Gew.-Teile] | 0,6 | 0,6 | 0,6 | 0,6 | 0,6 |
| LK443 | [Gew.-Teile] | 0,5 | 0,5 | 0,5 | 0,5 | 0,5 |
| Katalysator 2 | [Gew.-Teile] | 1,9 | 2,5 | 1,9 | 2,5 | 1,5 |
| Katalysator 1 | [Gew.-Teile] | 0,7 | 0,8 | 0,7 | 0,8 | 0,2 |
| Polyisocyanat 1 | [Gew.-Teile] | 100 | 100 | | | |
| Polyisocyanat 2 | [Gew.-Teile] | | | 100 | 100 | 100 |
| | | | | | | |
| c/i-Pentan (30 Gew%/70 Gew%) | [Gew.-Teile] | 6,9 | 6,9 | 6,9 | 6,9 | 6,9 |
| | | | | | | |
| Index | | 264 | 253 | 263 | 253 | 270 |
| | | | | | | |
| Startzeit | [Sek.] | 18 | 16 | 18 | 16 | 15 |
| Abbindezeit | [Sek.] | 51 | 49 | 55 | 49 | 48 |
| Klebefreizeit | [Sek.] | 95 | 75 | 95 | 65 | 60 |
| | | | | | | |
| Rohdichte | [kg/m$^3$] | 33,3 | 31,2 | 30,7 | 30,4 | 30,8 |
| durchschnittliche maximale Flammhöhe (DIN 11925) | [mm] | 147 | 187 | 142 | 162 | 127 |

(fortgesetzt)

| | | Vergleich | Vergleich | erfindungsgemäß | Vergleich | Vergleich |
|---|---|---|---|---|---|---|
| | | Beispiel 1 | Beispiel 2 | Beispiel 3 | Beispiel 4 | Beispiel 5 |
| Klassifizierung nach EN 13165: 2012+A1:2015 (D) Anhang B | | E | F | E | F | E |
| | | | | | | |
| L1% bei 100°C | [%] | 1,0 | -1,9 | 0,5 | -2,1 | -2,0 |
| L2% bei 100°C | [%] | 1,2 | -2,5 | 0,4 | -2,8 | -3,3 |
| D% bei 100°C | [%] | -0,8 | 0,4 | -0,2 | 0,4 | 0,5 |
| L1% bei -22°C | [%] | -0,34 | -0,05 | 0,09 | -0,2 | -0,38 |
| L2% bei -22°C | [%] | -0,35 | -0,13 | 0,1 | -0,33 | -0,52 |
| D% bei -22°C | [%] | -0,1 | 0,29 | 0,16 | 0,3 | 0,25 |

Wie aus der Tabelle 1 zu erkennen ist, zeigt der erfindungsgemäße Schaum in Beispiel 3 auf Basis des Polyisocyanates 2 mit einem HC-Wert bei 5 Stunden von 666 ppm sowohl eine niedrigere mittlere maximale Flammhöhe gemäß DIN EN ISO 11925 als auch eine niedrigere Dimensionsänderung bei 100°C als das Vergleichsbeispiel 1. Während die positiven Effekte bzgl. einer niedrigen mittleren maximalen Flammhöhe auch beim Einsatz von zusätzlichen Polyetherpolyolen in der Mischung B1) bestehen, wie Beispiel 2 und Beispiel 4 zeigen, so zeigt sich der Vorteil in der Dimensionsstabilität nur beim ausschließlichen Einsatz von Polyesterpolyolen. Im Vergleichsbeispiel 5 ist zwar die Brandbeständigkeit gut, jedoch die Dimensionsstabilität gering.

## Patentansprüche

**1.** Polyurethan-Polyisocyanurat-Hartschaumstoffe mit einem Isocyanatindex größer 200 und kleiner 700, erhältlich durch Umsetzung von

A) Polyisocyanaten mit
B1) Mischungen aus 50 bis 100 Gew.-% mindestens eines Polyesterpolyols und 0 bis 50 Gew.-% einer oder mehrerer Komponenten aus der Gruppe bestehend aus Polyetherpolyolen und Polyetheresterpolyolen ,
C) gegebenenfalls Kettenverlängerern und/oder Vernetzungsmitteln

in Gegenwart von

B2) Flammschutzmitteln
B3) Treibkatalysatoren,
B4) PIR-Katalysatoren,
B5) Treibmitteln,
B6) Schaumstabilisatoren,
B7) gegebenenfalls Hilfs- und/oder Zusatzmitteln,

**dadurch gekennzeichnet, dass** als Polyisocyanat A) eine Mischung mit einer Viskosität von mehr als 300 MPas bei 25°C gemäß (DIN EN ISO 3219:1994) und mit einem Gehalt an hydrolysierbarem Chlor von kleiner 1100 ppm nach 5 Stunden Hydrolyse (5h HC-Wert) enthaltend,

a1) 26-35 Gew.-% Diphenylmethandiisocyanat
a2) 21-28 Gew.-% Polyphenylenpolymethylenpolyisocyanat mit drei aromatischen Ringen,
a3) 6 -10 Gew.-% Polyphenylenpolymethylenpolyisocyanat mit vier aromatischen Ringen,
a4) 33-42 Gew.-% Polyphenylenpolymethylenpolyisocyanat mit fünf oder mehr aromatischen Ringen,

wobei sich die Gew.-% der Komponenten a1) bis a4) auf das Gesamtgewicht der Komponenten a1) bis a4) beziehen und sich zu 100 Gew.-% ergänzen, verwendet wird.

2. Polyurethan-Polyisocyanurat-Hartschaumstoffe nach Anspruch 1, **dadurch gekennzeichnet, dass** die Komponente A) weniger als 1000ppm nach 5 Stunden Hydrolyse (5h HC-Wert), bezogen auf das Gewicht der Komponente A), an hydrolysierbarem Chlor enthält.

3. Polyurethan-Polyisocyanurat-Hartschaumstoffe nach Anspruch 1, **dadurch gekennzeichnet, dass** die Komponente A) weniger als 800ppm nach 5 Stunden Hydrolyse (5h HC-Wert), bezogen auf das Gewicht der Komponente A), an hydrolysierbarem Chlor enthält.

4. Polyurethan-Polyisocyanurat-Hartschaumstoffe nach Anspruch 1, **dadurch gekennzeichnet, dass** die Komponente A) einen Gehalt an freien NCO-Endgruppen von 30 bis 33 Gew.-% aufweist.

5. Polyurethan-Polyisocyanurat-Hartschaumstoffe nach Anspruch 1, **dadurch gekennzeichnet, dass** die Komponente B1) mindestens ein Polyesterpolyol enthält, das durch Kondensation eines Adipinsäure-Phthalsäureanhydridgemisches und eines Diethylenglykol-Etylenglykolgemisches hergestellt wurde.

6. Polyurethan-Polyisocyanurat-Hartschaumstoffe nach Anspruch 1, **dadurch gekennzeichnet, dass** das Polyetherpolyol durch Anlagerung von Alkylenoxiden an Glycerin hergestellt wurde.

7. Polyurethan-Polyisocyanurat-Hartschaumstoffe nach Anspruch 1, **dadurch gekennzeichnet, dass** die Komponente B1) mindestens ein Polyesterpolyol und ein Polyetherpolyol enthält.

8. Verfahren zur Herstellung von Polyurethan-Polyisocyanurat-Hartschaumstoffen mit einem Index größer 200 und kleiner 700 durch Umsetzung von

A) Polyisocyanaten mit
B1) Mischungen aus 50 Gew% bis 100 Gew% mindestens eines Polyesterpolyols und 0 bis 50 Gew.-% einer oder mehrerer Komponenten aus der Gruppe bestehend aus Polyetherpolyolen und Polyetheresterpolyolen ,
C) gegebenenfalls Kettenverlängerern und/oder Vernetzungsmitteln

in Gegenwart von

B2) Flammschutzmitteln,
B3) Treibkatalysatoren,
B4) PIR-Katalysatoren,
B5) Treibmitteln,
B6) Schaumstabilisatoren,
B7) gegebenenfalls Hilfs- und Zusatzmitteln,

**dadurch gekennzeichnet, dass** als Polyisocyanat A) eine Mischung mit einer Viskosität von mehr als 300 MPas bei 25°C gemäß (DIN EN ISO 3219:1994)und mit einem Gehalt an hydrolysierbarem Chlor von kleiner 1100 ppm nach 5 Stunden Hydrolyse (5h HC-Wert) enthaltend

a1) 26-35 Gew.-% Diphenylmethandiisocyanat
a2) 21-28 Gew.-% Polyphenylenpolymethylenpolyisocyanat mit drei aromatischen Ringen,
a3) 6 -10 Gew.-% Polyphenylenpolymethylenpolyisocyanat mit vier aromatischen Ringen,
a4) 33-42 Gew.-% Polyphenylenpolymethylenpolyisocyanat mit fünf oder mehr aromatischen Ringen,

wobei sich die Gew.-% der Komponenten a1) bis a4) auf das Gesamtgewicht der Komponenten a1) bis a4) beziehen und sich zu 100 Gew.-% ergänzen, verwendet wird.

9. Verwendung der Polyurethan-Polyisocyanurat-Hartschaumstoffe gemäß einem oder mehreren der Ansprüche 1 bis 7 zur Herstellung von Dämmplatten und Metall-Sandwich-Elementen oder als diskontinuierlich oder kontinuierlich hergestellte harte Blockschäume.

# EUROPÄISCHER RECHERCHENBERICHT

Nummer der Anmeldung
EP 18 21 3800

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 257 883 A1 (COVESTRO DEUTSCHLAND AG [DE]) 20. Dezember 2017 (2017-12-20) * Absätze [0054], [0056], [0035], [0031]; Verbindung Blend I and II * ----- | 1-9 | INV. C08G18/76 C08G18/09 C08G18/42 |
| X | WO 2009/039332 A1 (YANTAI WANHUA POLYURETHANE CO [US]) 26. März 2009 (2009-03-26) * Absätze [0003], [0005]; Anspruch 9; Beispiele 4,5 * ----- | 1-9 | |
| A | EP 0 816 333 A1 (BASF AG [DE]) 7. Januar 1998 (1998-01-07) * Beispiele 1-4; Tabelle 1 * ----- | 1-9 | |

RECHERCHIERTE SACHGEBIETE (IPC)

C08G

Der vorliegende Recherchenbericht wurde für alle Patentansprüche erstellt

1

| Recherchenort | Abschlußdatum der Recherche | Prüfer |
|---|---|---|
| München | 17. Juni 2019 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 21 3800

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2019

| Im Recherchenbericht angeführtes Patentdokument | Datum der Veröffentlichung | Mitglied(er) der Patentfamilie | Datum der Veröffentlichung |
|---|---|---|---|
| EP 3257883 A1 | 20-12-2017 | CN 109312050 A | 05-02-2019 |
| | | EP 3257883 A1 | 20-12-2017 |
| | | EP 3472219 A1 | 24-04-2019 |
| | | WO 2017216213 A1 | 21-12-2017 |
| WO 2009039332 A1 | 26-03-2009 | CN 101848951 A | 29-09-2010 |
| | | EP 2203491 A1 | 07-07-2010 |
| | | US 2009105359 A1 | 23-04-2009 |
| | | WO 2009039332 A1 | 26-03-2009 |
| EP 0816333 A1 | 07-01-1998 | CA 2209139 A1 | 26-12-1997 |
| | | CN 1172125 A | 04-02-1998 |
| | | EP 0816333 A1 | 07-01-1998 |
| | | JP H1095763 A | 14-04-1998 |
| | | KR 980002016 A | 30-03-1998 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3516950 A


### In der Beschreibung aufgeführte Nicht-Patentliteratur


- **H. J. TWITCHETT.** *Chem. Soc. Rev.,* 1974, vol. 3 (2), 209
- **W. M. MOORE.** Kirk-Othmer Encycl. Chem. Technol. 1978, vol. 2, 338-348
- **H.J. TWITCHETT.** *Chem. Soc. Rev.,* 1974, vol. 3 (2), 223